# EUROPÄISCHE PATENTSCHRIFT

(11) **EP 1 925 923 B1**
(45) Veröffentlichungstag und Bekanntmachung des Hinweises auf die Patenterteilung: **12.03.2014**
(21) Anmeldenummer: 07021990.2
(22) Anmeldetag: 13.11.2007
(51) Int. Cl.: G01J 1/42, G01J 1/44

(54) **Verfahren und Vorrichtung zur Ermittlung von Messwerten, die für die solare Bestrahlungsstärke am Ort eines PV-Generators charakteristisch sind**
Method and device for determining measuring values characteristic for the solar irradiance at the location of a PV generator
Procédé et dispositif de détermination de valeurs de mesure caractéristiques pour la force de rayonnement solaire sur le site d'un générateur PV

(30) Priorität: 22.11.2006 DE 102006055642
(43) Veröffentlichungstag der Anmeldung: 28.05.2008
(73) Patentinhaber: Fraunhofer-Gesellschaft zur Förderung der angewandten Forschung e.V., 80686 München (DE)
(72) Erfinder: Bendel, Christian, 34270 Schauenburg (DE); Ries, Martin, 35066 Frankenberg (DE); Ritter, Stefan, 34346 Hann. Münden (DE)
(74) Vertreter: Zimmermann, Tankred Klaus

(56) Entgegenhaltungen:
- DE-U1-202004 001 246
- US-A- 5 327 071
- ANONYMOUS: "Solarstrahlungssensor SENSOL - Details" IKS PHOTOVOLTAIK MESS/PRÜFTECHNIK, [Online] 23. März 2005 (2005-03-23), XP002531961 Gefunden im Internet: URL:http://web.archive.org/web/20050323012 719/iks-photovoltaik.de/mess_sensol-detail .htm> [gefunden am 2009-06-10]
- ANONYMOUS: "SENSOL Technische Daten" IKS PHOTOVOLTAIK MESS/PRÜFTECHNIK, [Online] 22. März 2005 (2005-03-22), XP002531962 Gefunden im Internet: URL:http://web.archive.org/web/20050322020 646/iks-photovoltaik.de/mess_sensol-daten. htm> [gefunden am 2009-06-10]

## Beschreibung

Die Erfindung betrifft ein Verfahren und eine Vorrichtung nach den Oberbegriffen der Ansprüche 1 und 6.

In der Solartechnik ist es häufig erwünscht, die solare Bestrahlungsstärke an ausgesuchten Standorten von PV-Anlagen zu ermitteln, um daraus Schlussfolgerungen auf das solare Strahlungsangebot zu ziehen und/oder dieses mit der elektrischen Leistung zu vergleichen, die von einer bereits installierten PV-Anlage tatsächlich abgegeben wird. Trotz des ständig wachsenden PV-Marktes stehen jedoch bis heute keine Strahlungssensoren zur Verfügung, mittels derer die Bestrahlungsstärke am Ort eines PV-Generators exakt ermittelt werden kann.

Strahlungssensoren in Form von Thermosäulen, Pyrometern od. dgl. lassen sich in diesem Zusammenhang nicht allgemein anwenden, weil sie eine andere spektrale Empfindlichkeit als auf dem Markt befindliche Solarzellen haben und daher allenfalls über mehr oder weniger ungenaue Umrechnungsformeln zu den von Solarzellen tatsächlich verarbeiteten Teilen der Gesamtstrahlung führen. Es ist daher allgemein üblich, die solare Bestrahlungsstärke mit Hilfe von Solarzellen zu ermitteln, die mit denen des jeweiligen PV-Generators technologisch gleichartig sind. Problematisch ist dabei allerdings die erforderliche Kalibrierung der verwendeten Strahlungssensoren, da bereits geringfügige Messfehler zu erheblichen Abweichungen bei der Beurteilung der Leistungsfähigkeit einer PV-Anlage führen können.

Bekannte, auf der Basis von Solarzellen aufgebaute Strahlungssensoren (z. B. DE 299 09 648 U1) benötigen für eine exakte Kalibrierung neben der Strahlungsaufnahme eine gleichzeitige Erfassung der Temperatur der Solarzellen, was komplizierte Messvorrichtungen erfordert. Verschiedene, auf dem Markt angebotene Strahlungssensoren weisen daher zusätzliche Korrekturnetzwerke zur Kompensation von Temperaturabweichungen auf oder werden zusammen mit zusätzlichen Kalibrierkurven (Nomogrammen) angeboten. Weiterhin ist es bekannt, die Bestrahlungsstärke mit Solarzellen im MPP-Punkt, d. h. im Punkt maximaler Leistung (Maximum Power Point) zu ermitteln (z. B. DE 20 2004 001 246 U1). Hier entfällt zwar sowohl die Notwendigkeit der gleichzeitigen Temperaturmessung, weil die Temperaturabhängigkeit in der MPP-Leistung berücksichtigt ist, als auch das Erfordernis einer zusätzlichen Energieversorgung, weil die Messzelle gleichzeitig zur Erzeugung der für den Messvorgang benötigten elektrischen Energie genutzt wird. Als Nachteil wird jedoch der vergleichsweise große konstruktive Aufwand empfunden, der mit der MPP-Regelung verbunden ist.

Schließlich ist es bekannt, Strahlungssensoren zu verwenden, die unter Standard-Test-Bedingungen (STC = Standard-Test-Conditions) kalibriert worden sind. Eine derartige Kalibrierung ist jedoch vergleichsweise aufwendig und kostspielig und kann nur von wenigen Fachinstituten wie z. B. der Bundestechnischen Prüfanstalt (BTP) in Braunschweig durchgeführt werden. Die Ermittlung der Strahlungsenergie am Ort von bereits installierten PV-Generatoren erfolgt daher in der Regel nicht mit einem derart geeichten, sogenannten Mastersensor, sondern mit Verfahren und Vorrichtungen der eingangs bezeichneten Gattung unter Anwendung von Messzellen von Form von Solarzellen, die nach einem technologisch gleichartigen Verfahren wie die Solarzellen des PV-Generators hergestellt und mit einem exakt kalibrierten Mastersensor, der eine ebenfalls nach derselben Technologie hergestellte Solarzelle aufweist, geeicht worden sind. Unter "technologisch gleichartig" oder "nach derselben Technologie hergestellt" wird dabei verstanden, dass zur Herstellung der Solarzellen dieselben Verfahren und Materialsysteme wie z. B. monokristallines, multikristallines oder amorphes Silizium, CdTe, CIS od. dgl. verwendet werden.

Nachteilig an der zuletzt genannten Verfahrensweise ist, dass trotz Anwendung gleichartiger Technologien unterschiedliche Messergebnisse für die Bestrahlungsstärke erzielt werden. Das ist z. B. eine Folge davon, dass unterschiedliche Produktionszeiten oder Produktionsstandorte, andere Einbettungsmethoden, Qualitätsschwankungen der verwendeten Materialien od. dgl. zu unterschiedlichen Eigenschaften der ansonsten gleichartigen Solarzellen führen können und dass daher das Verhalten der Mess-Solarzellen bei Bestrahlung ein anderes als das Verhalten der Solarzellen des PV-Generators bei derselben Bestrahlung sein kann.

Ausgehend davon besteht das technische Problem der vorliegenden Erfindung darin, das Verfahren und die Vorrichtung der eingangs bezeichneten Gattungen so zu gestalten, dass eine noch genauere Ermittlung der Bestrahlungsstärke möglich ist und Messfehler aufgrund der beschriebenen möglichen Unterschiede der Solarzelleneigenschaften nahezu vollständig vermieden werden.

Zur Lösung dieses Problems dienen die kennzeichnenden Merkmale der Ansprüche 1 und 6.

Die Erfindung bringt den Vorteil mit sich, dass als Mess-Solarzelle eine Solarzelle des fertigen PV-Generators verwendet wird. Da davon ausgegangen werden kann, dass die als Messzelle ausgewählte Solarzelle eines PV-Generators bezüglich Materialzusammensetzung, Einbettung, spektraler Empfindlichkeit, Reflexionsverhalten usw. identisch mit allen übrigen Solarzellen desselben PV-Generators ist, führen die mit einer solchen Mess-Solarzelle ermittelten Messwerte zu Bestrahlungsstärken, die mit den Bestrahlungsstärken, denen der gesamte PV-Generator ausgesetzt ist, weitgehend im Einklang stehen. Außerdem ergibt sich der Vorteil, dass zur Erzeugung der für die Messanordnung benötigten Energie der gesamte PV-Generator und nicht nur wie bisher eine einzelne Mess-Solarzelle zur Verfügung steht.

Weitere vorteilhafte Merkmale der Erfindung ergeben sich aus den Unteransprüchen.

Die Erfindung wird nachfolgend in Verbindung mit den beiliegenden Zeichnungen an zwei Ausführungsbeispielen näher erläutert. Es zeigen:
Fig. 1 ein schematisches Blockschaltbild einer erfindungsgemäßen Vorrichtung, bei der eine einzelne Solarzelle eines PV-Generators für Messzwecke zeitweilig von den übrigen Solarzellen abgekoppelt wird; und
Fig. 2 ein schematisches Blockschaltbild einer erfindungsgemäßen Vorrichtung, bei der eine einzelne Solarzelle eines PV-Generators permanent von diesem abgekoppelt und an eine Messschaltung angeschlossen ist, während der Rest der Solarzellen für die Energieversorgung verwendet wird.

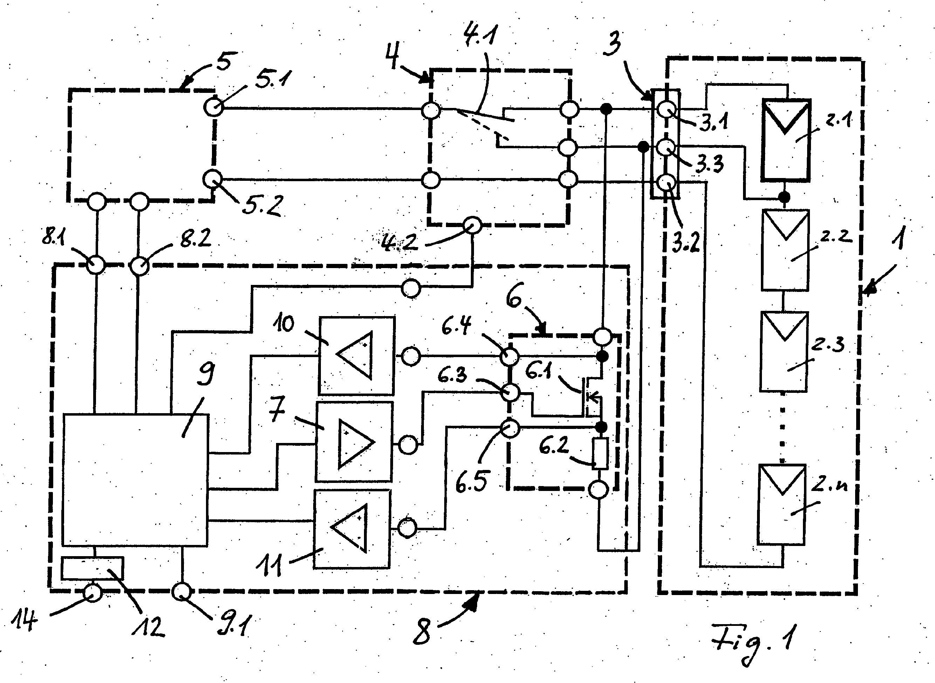

In Fig. 1 ist mit dem Bezugszeichen 1 ein PV-Generator bezeichnet. Dieser besteht im Ausführungsbeispiel aus einem einzigen PV-Modul, der als sog. String ausgebildet ist und eine Mehrzahl von in Reihenschaltung angeordneten Solarzellen 2.1, 2.2 ... 2.n aufweist. Die in der Reihenschaltung erste Solarzelle 2.1 ist mit ihrer Anode an einen Kontakt 3.1 einer Anschlussdose 3 angeschlossen, während die Katode der letzten Solarzelle 2.n der Reihenschaltung mit einem Kontakt 3.2 der Anschlussdose 3 verbunden ist. Schließlich ist der Verbindungspunkt der Anode der zweiten Solarzelle 2.2 mit der Katode der ersten Solarzelle 2.1 an einen dritten Kontakt 3.3 der Anschlussdose 3 angeschlossen.

Die Kontakte 3.1 bis 3.3 sind über eine Umschalteinrichtung 4 mit einer Aufbereitungseinheit 5 verbunden, die zur photovoltaischen Erzeugung von elektrischer Energie bzw. der Versorgungsspannung für eine weiter unten beschriebene Messschaltung 8 dient. Die Umschalteinrichtung 4 enthält einen Schalter 4.1, der einerseits fest mit einem Eingang der Aufbereitungseinheit 5 verbunden ist, andererseits wahlweise mit dem Kontakt 3.1 oder dem Kontakt 3.3 der Anschlussdose 3 verbunden werden kann. Der dritte Kontakt 3.2 der Anschlussdose 3 ist über die Umschalteinrichtung 4 direkt und permanent mit einem zweiten Eingang der Aufbereitungseinheit 5 verbunden.

Die Kontakte 3.1 und 3.3 sind ferner mit den beiden Anschlüssen einer allgemein mit dem Bezugszeichen 6 bezeichneten, steuerbaren elektrischen Last verbunden, die z. B. eine Serienschaltung aus einem FET-Baustein 6.1, der einen elektronisch veränderbaren Widerstand besitzt, und einem ohmschen Widerstand 6.2 ist und somit einen Spannungsteiler bildet. Ein Steuereingang des FET-Bausteins 6.1 ist über einen Eingang 6.3 der Last 6 mit dem Ausgang einer Steuereinheit 7 verbunden, mittels derer der elektrische Widerstand des FET-Bausteins 6.1 verändert werden kann.

Die elektrisch steuerbare Last 6 und die Steuereinheit 7 sind Teile der elektrischen Messschaltung 8, die als weiteren Bestandteil einen Mikroprozessor 9 enthält. Der Mikroprozessor 9 weist einen mit der Steuereinheit bzw. dem Treiber 7 verbundenen Ausgang und zwei Eingänge auf, die über als Differenzverstärker ausgebildete Verstärker 10 und 11 mit zwei Ausgängen 6.4 und 6.5 der Last 6 verbunden sind. Insbesondere ist der eine Verstärker 10 über den Ausgang 6.4 mit dem positiven Anschluss des FET-Bausteins 6.1 verbunden, während der andere Verstärker 11 über den Ausgang 6.5 mit dem Verbindungspunkt zwischen dem FET-Baustein 6.1 und dem ohmschen Widerstand 6.2 verbunden ist. Ein weiterer Ausgang des Mikroprozessors 9 ist mit einem Steuereingang 4.2 der Umschalteinrichtung 4 verbunden und dient dem Zweck, den Schalter 4.1 wahlweise mit dem Kontakt 3.1 oder dem Kontakt 3.3 der Anschlussdose 3 zu verbinden.

Der Versorgung der Messschaltung 8 mit elektrischer Energie erfolgt mit Hilfe der Aufbereitungseinheit 5, die z. B. ein übliches, vorzugsweise mit einem Energiespeicher in Form einer Batterie od. dgl. versehenes Netzteil enthalten kann, und die vom PV-Generator 1 gelieferte Ausgangsspannung in eine Spannung umwandelt, mit der die Messschaltung 8 betrieben wird. Die Aufbereitungseinheit 5 enthält dazu insbesondere zwei mit entsprechenden Eingängen 8.1 und 8.2 der Messschaltung 8 verbundene Ausgänge, an die z. B. der Mikroprozessor 9 angeschlossen ist.

Die anhand der Fig. 1 beschriebene Vorrichtung dient zur Ermittlung von Messwerten, die für die solare Bestrahlungsstärke am Ort des PV-Generators 1 charakteristisch sind, und arbeitet im wesentlichen wie folgt:

In der aus Fig. 1 ersichtlichen Stellung des Schalters 4.1 sind die Kontakte 3.1 und 3.2 der Anschlussdose 3 mit der Aufbereitungseinheit 5 verbunden. Dadurch wird die gesamte, vom PV-Generator 1 erzeugte elektrische Spannung an den Eingang der Aufbereitungseinheit 5 gelegt und zur Erzeugung der für den Betrieb der Messschaltung 8 erforderlichen elektrischen Energie benutzt. Gleichzeitig ist über den Mikroprozessor 9 und dessen mit der Steuereinheit 7 verbundenen Ausgang dafür gesorgt, dass der FET-Baustein 6.1 einen so hohen Widerstand besitzt, dass die Last praktisch stromlos ist. Die Steuereinheit 7 kann in diesem Fall ein einfacher Verstärker sein, der an einen entsprechenden Steuerausgang des Mikroprozessors 9 angeschlossen ist und lediglich dessen Steuersignale auf ein zum Betreiben des FET-Bausteins 6.1 erforderliches Niveau einstellt.

Soll eine Messung vorgenommen werden, wird über den Mikroprozessor 9 der Schalter 4.1 in die in Fig. 1 gestrichelt dargestellte Stellung umgeschaltet, wodurch der betreffende Eingang der Aufbereitungseinheit 5 mit dem Kontakt 3.3 der Anschlussdose 3 verbunden wird. Der Aufbereitungseinheit 5 wird nun eine Spannung der PV-Generators 1 zugeführt, die von allen Solarzellen 2.2 bis 2. n mit Ausnahme der Solarzelle 2.1 erzeugt wird. Im Hinblick auf die von der Aufbereitungseinheit 5 zu erzeugende Versorgungsspannung bedeutet das gegenüber dem vorhergehenden Zustand keinen großen Unterschied. Enthält der PV-Generator 1 beispielsweise einhundert in Reihenschaltung verbundene Solarzellen 2.1 ... 2.n, dann bedeutet die beschriebene zeitweilige Abkopplung der Solarzelle 2.1 mit Hilfe der Umschalteinrichtung 4 lediglich eine Änderung der Eingangsspannung der Aufbereitungseinheit 5 um ca. 1 %, was nicht ins Gewicht fällt.

Die abgekoppelte Solarzelle 2.1, die vorzugsweise die erste Solarzelle des Strings ist, ist über die Kontakte 3.1 und 3.3 weiterhin mit der Last 6 verbunden und dient während der nachfolgend beschriebenen Messintervalle als Mess-Solarzelle.

Mit Hilfe des Mikroprozessors 9 wird nun ein Messintervall durchgeführt. Hierzu wird die Steuereinheit 7 so angesteuert, dass der Widerstand des FET-Bausteins 6.1 kontinuierlich oder schrittweise reduziert wird. Dadurch ändern sich die Spannungen an den Ausgängen 6.4 und 6.5 der Last 6, wobei die Spannung am Ausgang 6.4 proportional zu der an der Mess-Solarzelle 2.1 liegenden Spannung und die Spannung am Ausgang 6.5 proportional zu dem die Mess-Solarzelle 2.1 durchfließenden Strom ist. Beide Spannungen werden über die der Anpassung der Messsignale dienenden Verstärker 10 und 11 dem Mikroprozessor 9 zugeführt und in diesem nach einem darin gespeicherten Programm verarbeitet und ausgewertet. Insbesondere wird aus den Messwerten die der aktuellen Bestrahlung entsprechende Strom/Spannungs-Kennlinie der Mess-Solarzelle 2.1 aufgezeichnet und aus dieser dann der MPP-Punkt ermittelt, in dem die Mess-Solarzelle 2.1 mit maximaler Leistung arbeitet.

Bevor der PV-Generator 1 und die Messschaltung 8 in Betrieb genommen werden, muss die Mess-Solarzelle 2.1 geeicht werden. Das erfolgt in an sich bekannter Weise dadurch, dass die Mess-Solarzelle 2.1 und ein Mastersensor derselben Bestrahlung ausgesetzt und die dabei erhaltenen Messwerte miteinander verglichen werden. Eine derartige Kalibrierung kann mit einer Blitzlampe (Flash-Verfahren), mit einer kontinuierlich betriebenen Lampe (Simulations-Verfahren) oder unter natürlichem Sonnenlicht (Out-Door-Kalibrierung) erfolgen. Dabei wird die bekannte Tatsache ausgenutzt, dass nach derselben Technologie hergestellte, z. B. aus monokristallinem Silizium hergestellte Solarzellen bei gleicher Bestrahlung zwar je nach Herstellungsart, Herstellungszeit od. dgl. zu unterschiedlichen Produkten U·I im MPP-Punkt führen können, dass sich diese Werte aber bei Änderungen der Bestrahlungsstärke in gleicher

Weise ändern. Mit anderen Worten ist es möglich, eine Eichung der Mess-Solarzelle 2.1 dadurch vorzunehmen, dass diese und ein unter Standard-Test-Bedingungen STC kalibrierter Mastersensor gleichzeitig mit derselben Strahlungsquelle bei unterschiedlichen Bestrahlungsstärken bestrahlt und den dabei in den MPP-Punkten erhaltenen U·I-Werten der Mess-Solarzelle 2.1 die vom Mastersensor angezeigten Bestrahlungsstärken fest zugeordnet werden. Die so erhaltenen Wertepaare können dann in einem Speicher z. B. des Mikroprozessors 9 abgelegt werden, so dass beim nachfolgenden Betrieb des PV-Generators 1 auf einfache Weise jedem in einem Messintervall der Mess-Solarzelle 2.1 im MPP-Punkt ermittelter U·I-Wer eindeutig und praktisch fehlerfrei eine aktuelle Bestrahlungsstärke zugeordnet werden kann. Gegenüber bisherigen Verfahren und Vorrichtungen wird auf diese Weise der wesentliche Vorteil erzielt, dass die verwendete Mess-Solarzelle 2.1 aus derselben Charge wie die übrigen Solarzellen 2.2 bis 2. n des PV-Generators 1 stammt und das Temperaturverhalten, die spektrale Empfindlichkeit und andere physikalische Eigenschaften aller Solarzellen 2.1 bis 2.n im wesentlichen identisch sind, weshalb die mit der Mess-Solarzelle 2.1 erhaltenen Bestrahlungsstärken repräsentativ für den gesamten PV-Generator 1 sind. Das Verhältnis aus der in ein Netz eingespeisten elektrischen Leistung des PV-Generators 1 zu der gemessenen solaren Strahlungsleistung (Performance Ratio) kann daher genauer als bisher ermittelt werden mit der Folge, dass sehr genau überprüft werden kann, ob die vom PV-Generator 1 abgegebene elektrische Leistung mit der eingestrahlten solaren Leistung vereinbar ist oder irgendwo ein Fehler vorliegt.

Nach Durchführung der Kalibrierung kann die Mess-Solarzelle 2.1 durch Umschaltung des Schalters 4.1 auf den Kontakt 3.3 zu jedem beliebigen Zeitpunkt wirksam gemacht werden. Als zweckmäßig hat es sich erwiesen, die Messintervalle in definierten Zeitabständen von z. B. 5 bis 10 Sekunden aufeinander folgen zu lassen und jedem Messintervall eine vorgewählte Dauer von z. B. 100 ms bis 500 ms zu geben. Die im Einzelfall gewünschten Werte können durch Programmierung des Mikroprozessors 9 und entsprechende Ansteuerungen der Umschalteinrichtung 4 und des FET-Bausteins 6.1 festgelegt werden.

Die während der Messintervalle erhaltenen Strom- und Spannungs-Messwerte, die für die Bestrahlungsstärke am Ort des PV-Generators 1 charakteristisch sind, können in an sich bekannter Weise über Leitungen oder per Funkt an eine zentrale Auswertestelle übermittelt werden. Zu diesem Zweck kann der Mikroprozessor 9 an einem Ausgang 9.1 mit einer geeigneten Schnittstelle (RS 232, RS 485, PLC od. dgl.) versehen werden, um die Messwerte über daran angeschlossene Leitungen zu übertragen. Alternativ wird an einem Ausgang des Mikroprozessors 9 ein Funkmodul 12 mit Antenne 14 angeschlossen, um eine Übertragung per Funk zu ermöglichen.

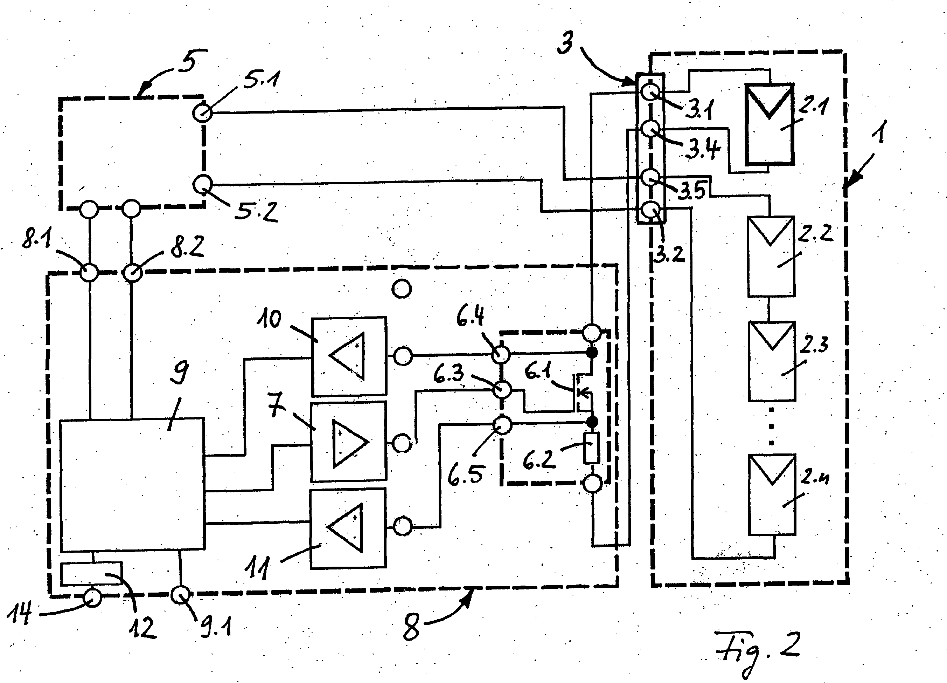

Das in Fig. 2 dargestellte Ausführungsbeispiel entspricht im wesentlichen dem nach Fig. 1. Unterschiedlich ist hier insbesondere, dass die Mess-Solarzelle 2.1 von der nächsten, in der Reihenschaltung folgenden Solarzelle 2.2 und vom übrigen PV-Generator 1 galvanisch vollkommen getrennt ist und die Umschalteinrichtung 4 fehlt. Zu diesem Zweck sind der Kontakt 3.1 und ein weiterer Kontakt 3.4 der Anschlussdose 3 allein an die Last 6 angeschlossen, wobei der Kontakt 3.4 nur mit der Katode der Mess-Solarzelle 2.1, aber nicht auch mit der nächsten folgenden Solarzelle 2.2 verbunden ist. Außerdem enthält die Anschlussdose 3 einen vierten Kontakt 3.5, der an den positiven Anschluss der auf die Mess-Solarzelle 2.1 folgenden Solarzelle 2.2 des PV-Generators 1 angeschlossen ist. Schließlich sind die beiden Kontakte 3.2 und 3.5 der Anschlussdose permanent und direkt mit den beiden Eingängen der Aufbereitungseinheit 5 und die Kontakte 3.1 und 3.4 permanent und direkt mit den beiden Anschlüssen der Last 6 verbunden. Im Hinblick auf die Betriebsweise der Vorrichtung nach Fig. 2 ergibt sich somit, dass die Aufbereitungseinheit 5 permanent nur mit der Spannung versorgt wird, die von den Solarzellen 2.2 bis 2.n des PV-Generators 1 erzeugt wird, und dass die Mess-Solarzelle 2.1 permanent an die Last 6 angeschlossen ist, so dass mit ihr die Strom/Spannungs-Kennlinien auch kontinuierlich aufgenommen werden können. Im übrigen entspricht die Arbeitsweise der Vorrichtung nach Fig. 2 der Arbeitsweise der Vorrichtung nach Fig. 1.

Die Erfindung ist nicht auf die beschriebenen Ausführungsbeispiele beschränkt, die auf vielfache Weise abgewandelt werden können. Das gilt insbesondere für die Art der im PV-Generator 1 verwendeten Solarzellen 2.1 bis 2.n, die zwar untereinander alle möglichst identisch ausgebildet sind, aber von Generator zu Generator nach einer anderen Technologie hergestellt sein könnten. Dabei ist klar, dass die Vorrichtungen nach Fig. 1 und 2 auch in Abhängigkeit von der verwendeten Technologie ausgewählt werden können. Nach der Dünnschicht- oder Dünnfilmtechnik hergestellte Solarmodule ermöglichen z. B. nicht ohne weiteres eine vollständige Abkopplung einer einzelnen Solarzelle im Sinne der Fig. 2, weshalb für diese Fälle die Vorrichtung nach Fig. 1 besser geeignet ist. Weiter ist klar, dass die als Mess-Solarzelle ausgewählte Solarzelle nicht notwendigerweise die erste Zelle in einem stringartig ausgebildeten Modul sein muss, wenn dies auch eine besonders einfache Variante darstellt, weil diese entsprechend Fig. 1 nur eine zusätzliche, zum Kontakt 3.3 führende Kontaktbahn und entsprechend Fig. 2 nur zwei zusätzliche, zu den Kontakten 3.4 und 3.5 führende Kontaktbahnen unter gleichzeitiger galvanischer Trennung der Solarzellen 2.1 und 2.2 voneinander erfordert. Diese Kontaktbahnen können bereits beim Hersteller der PV-Module angebracht werden. Weiter wurden die Aufbereitungseinheit 5 und die Messschaltung 8 nur beispielhaft beschrieben, so dass auch andere Anordnungen möglich sind. Insbesondere könnte der steuerbare FET-Baustein 6.1 durch einen anderen steuerbaren Widerstand ersetzt werden. Weiter kann der PV-Generator 1 nicht nur aus einem einzigen PV-Modul bestehen, sondern wie üblich aus einer Mehrzahl von parallel oder in Serie verbundenen Modulen zusammengesetzt werden, die jeweils eine an sich beliebige Anzahl von Solarzellen aufweisen können. Weiterhin sind die Abstände zwischen den Messintervallen und deren Dauern weitgehend frei wählbar, wobei es auch möglich ist, aus den während mehrerer Messintervalle erhaltenen Ergebnissen Mittelwerte zu bilden, die dann entsprechend für mittlere Bestrahlungsstärken charakteristisch sind.

## Patentansprüche

1. Verfahren zur Ermittlung von Messwerten, die für die solare Bestrahlungsstärke am Ort eines PV-Generators (1), der eine Mehrzahl von Solarzellen (2.1 bis 2.n) umfasst, charakteristisch sind, wobei während ausgewählter Messintervalle Strom- und Spannungswerte einer Mess-Solarzelle, die derselben Bestrahlung wie der PV-Generator (1) ausgesetzt ist, gemessen werden und die elektrische Energie für hierzu erforderliche elektrische Einrichtungen photovoltaisch erzeugt wird,
**dadurch gekennzeichnet,**
**dass** eine Solarzelle (2.1) der Mehrzahl von Solarzellen (2.1 bis 2.n) des PV-Generators (1) als Mess-Solarzelle verwendet wird,
**dass** die verbleibenden Solarzellen (2.2 bis 2.n) des PV-Generators (1) während der Messintervalle die elektrische Energie erzeugen, und
**dass** während der Messintervalle eine der aktuellen Bestrahlung entsprechende Strom/Spannungs-Kennlinie der Mess-Solarzelle (2.1) aufgezeichnet wird, aus der aufgezeichrieten Strom/Spannungs-Kennlinie der Punkt maximaler Leistung (MPP-Punk) ermittelt wird, und die dem ermittelten MPP-Punkt in einer vorangegangenen Eichung zugeordnete Bestrahlungsstärke erhalten wird.

2. Verfahren nach Anspruch 1, **dadurch gekennzeichnet, dass** die Strom- und Spannungswerte mit Hilfe einer elektronisch steuerbaren Last (6) ermittelt werden.

3. Verfahren nach Anspruch 1 oder 2, **dadurch gekennzeichnet, dass** während der Messintervalle die Mess-Solarzelle (2.1) vom PV-Generator (1) abgekoppelt wird.

4. Verfahren nach einem der Ansprüche 1 bis 3, **dadurch gekennzeichnet, dass** die Mess-Solarzelle (2.1) mit Hilfe eines Mastersensors kalibriert wird, der eine nach derselben Technologie hergestellte Solarzelle aufweist.

5. Verfahren nach Anspruch 4, **dadurch gekennzeichnet, dass** die Kalibrierung mit einer Blitz- oder Permanentlichtquelle oder unter natürlichem Sonnenlicht erfolgt.

6. Vorrichtung zur Ermittlung von Messwerten, die für die solare Bestrahlungsstärke am Ort eines PV-Generators (1), der eine Mehrzahl von Solarzellen (2.1 bis 2.n) umfasst, charakteristisch sind, mit folgenden Merkmalen:
einer elektrischen Messschaltung (8), die zur Messung von Strom- und Spannungswerten mit einer Mess-Solarzelle verbindbar ist, und die zur Versorgung mit Energie mit einer Aufbereitungseinheit (5) zur photovoltaischen Erzeugung von elektrischer Energie verbindbar ist,
**dadurch gekennzeichnet,**
**dass** die elektrische Messschaltung (8) konfiguriert ist, um während ausgewählter Messintervalle eine der aktuellen Bestrahlung entsprechende Strom/Spannungs-Kennlinie der Mess-Solarzelle (2.1) aufzuzeichnen, aus der aufgezeichneten Strom/Spannungs-Kennlinie den Punkt maximaler Leistung (MPP-Punkt) zu ermitteln, und die dem ermittelten MPP-Punkt in einer vorangegangenen Eichung zugeordnete Bestrahlungsstärke zu erhalten, und
**dass** eine Solarzelle (2.1) der Mehrzahl von Solarzellen (2.1 bis 2.n) des PV-Generators (1) die Mess-Solarzelle ist, und die verbleibenden Solarzellen (2.2 bis 2.n) des PV-Generators (1) während der Messintervalle mit der Aufbereitungseinheit (5) verbunden sind.

7. Vorrichtung nach Anspruch 6, **dadurch gekennzeichnet, dass** die Messschaltung (8) eine der Mess-Solarzelle (2.1) parallel geschaltete, elektronisch veränderbare Last (6), einen mit der Last (6) verbundenen Mikroprozessor (9) und eine zur Steuerung der Last (6) bestimmte Steuereinheit (7) enthält.

8. Vorrichtung nach Anspruch 6 oder 7, **dadurch gekennzeichnet, dass** die Mess-Solarzelle (2.1) an die Messschaltung (8) angeschlossen ist und alle Solarzellen (2.2 bis 2.n) des PV-Generators (1), ausgenommen die Mess-Solarzelle (2.1), mit der Aufbereitungseinheit (5) verbunden sind.

9. Vorrichtung nach Anspruch 8, **dadurch gekennzeichnet, dass** die Mess-Solarzelle (2.1) irgendeine Solarzelle eines handelsüblichen PV-Moduls ist, der jedoch dahingehend modifiziert ist, dass er eine Anschlussdose (3) mit zwei nur an die Mess-Solarzelle (2.1) angeschlossenen Kontakten (3.1, 3.4) und zwei nur an die Aufbereitungseinheit (5) anzuschließenden Kontakten (3.2, 3.5) enthält.

10. Vorrichtung nach Anspruch 6 oder 7, **dadurch gekennzeichnet, dass** die Mess-Solarzelle (2.1) die erste Solarzelle einer Mehrzahl von in Reihenschaltung angeordneten Solarzellen (2.1 bis 2. n) eines handelsüblichen PV-Moduls ist, der dahingehend modifiziert ist, dass er eine Anschlussdose (3) mit einem zusätzlichen Kontakt (3.3) enthält, der an den Verbindungspunkt zwischen der Mess-Solarzelle (2.1) und der nächsten folgenden Solarzelle (2.2) der Reihenschaltung angeschlossen ist.

11. Vorrichtung nach einem der Ansprüche 6, 7 oder 10, **dadurch gekennzeichnet, dass** sie eine zwischen dem PV-Generator (1) und der Aufbereitungseinheit (5) angeordnete Umschalteinrichtung (4) enthält, mittels derer während ausgewählter Messintervalle alle Solarzellen (2.2 bis 2.n) des PV-Generators (1) mit Ausnahme der Mess-Solarzelle (2.1) und in zwischen den Messintervallen liegenden Zeitabschnitten alle Solarzellen (2.1 bis 2.n) des PV-Generators (1) einschließlich der Mess-Solarzelle (2.1) an die Aufbereitungseinheit (5) anschließbar sind.

12. Vorrichtung nach Anspruch 11, **dadurch gekennzeichnet, dass** die Umschalteinrichtung (4) mit dem Mikroprozessor (9) verbunden und durch diesen gesteuert ist.

13. Vorrichtung nach einem der Ansprüche 7 bis 12, **dadurch gekennzeichnet, dass** der Mikroprozessor (9) so programmiert ist, dass die Messintervalle in definierten Zeitabständen aufeinander folgen.

14. Vorrichtung nach einem der Ansprüche 7 bis 13, **dadurch gekennzeichnet, dass** der Mikroprozessor (9) so programmiert ist, dass die Messintervalle eine vorgewählte Dauer haben.

15. Vorrichtung nach einem der Ansprüche 7 bis 14, **dadurch gekennzeichnet, dass** der Mikroprozessor (9) einen als Schnittstelle ausgebildeten Ausgang (9.1) zur Übertragung der Messwerte mittels Leitungen aufweist.

16. Vorrichtung nach einem der Ansprüche 7 bis 14, **dadurch gekennzeichnet, dass** der Mikroprozessor (9) einen mit einem Funkmodul (12) und einer Antenne (14) verbundenen Ausgang zur Übertragung der Messwerte über Funk aufweist.

17. System zur Ermittlung von Messwerten, die für die solare Bestrahlungsstärke am Ort eines PV-Generators (1) charakteristisch sind, mit folgenden Merkmalen:
einer Mess-Solarzelle;
einer Aufbereitungseinheit (5) zur photovoltaischen Erzeugung von elektrischer Energie; und
einem PV-Generators (1), der eine Mehrzahl von Solarzellen (2.1 bis 2.n) umfasst, wobei eine Solarzelle (2.1) der Mehrzahl von Solarzellen (2.1 bis 2.n) des PV-Generators (1) die Mess-Solarzelle ist, und die verbleibenden Solarzellen (2.2 bis 2.n) des PV-Generators (1) mit der Aufbereitungseinheit (5) verbunden sind; und
einer elektrischen Messschaltung (8) nach einem der Ansprüche 6 bis 16, die zur Messung von Strom- und Spannungswerten mit der Mess-Solarzelle verbunden ist, und die zur Versorgung mit Energie mit der Aufbereitungseinheit (5) verbunden ist.

## Claims

1. Method for determining measurement values that are characteristic for the solar irradiance at the location of a PV generator (1) including a plurality of solar cells (2.1 to 2.n), wherein, during selected measurement intervals, current and voltage values of a measurement solar cell subject to the same irradiation as the PV generator (1) are measured and the electric energy for electric means necessary for this is generated by photovoltaic means,
**characterized in that**
a solar cell (2.1) of the plurality of solar cells (2.1 to 2.n) of the PV generator (1) is used as measurement solar cell,
the remaining solar cells (2.2 to 2.n) of the PV generator (1) generate the electric energy during the measurement intervals, and
during the measurement intervals, a current/voltage characteristic curve of the measurement solar cell (2.1) corresponding to the prevailing irradiation is recorded, the maximum power point (MPP point) is determined from the recorded current/voltage characteristic curve, and the irradiance assigned to the determined MPP point in a previous calibration is obtained.

2. Method according to claim 1, **characterized in that** the current and voltage values are determined by means of an electronically controllable load (6).

3. Method according to claim 1 or 2, **characterized in that** the measurement solar cell (2.1) is uncoupled from the PV generator (1) during the measurement intervals.

4. Method according to one of claims 1 to 3, **characterized in that** the measurement solar cell (2.1) is calibrated by means of a master sensor comprising a solar cell produced according to the same technology.

5. Method according to claim 4, **characterized in that** the calibration is performed with a flash or permanent light source or under natural sunlight.

6. Apparatus for determining measurement values that are characteristic for the solar irradiance at the location of a PV generator (1) including a plurality of solar cells (2.1 to 2.n), comprising:
an electric measurement circuit (8) connectable to a measurement solar cell for measuring current and voltage values and connectable to a rendering unit (5) for photovoltaic generation of electric energy for energy supply,
**characterized in that**
the electric measurement circuit (8) is configured to record, during selected measurement intervals, a current/voltage characteristic curve of the measurement solar cell (2.1) corresponding to the prevailing irradiation, to determine the maximum power point (MPP point) from the recorded current/voltage characteristic curve, and to obtain the irradiance assigned to the determined MPP point in a previous calibration, and
a solar cell (2.1) of the plurality of solar cells (2.1 to 2.n) of the PV generator (1) is the measurement solar cell, and the remaining solar cells (2.2 to 2.n) of the PV generator (1) are connected to the rendering unit (5) during the measurement intervals.

7. Apparatus according to claim 6, **characterized in that** the measurement circuit (8) includes an electronically variable load (6) connected in parallel to the measurement solar cell (2.1), a microprocessor (9) connected to the load (6) and a control unit (7) determined for controlling the load (6).

8. Apparatus according to claim 6 or 7, **characterized in that** the measurement solar cell (2.1) is connected to the measurement circuit (8) and all solar cells (2.2 to 2.n) of the PV generator (1), with the exception of the measurement solar cell (2.1), are connected to the rendering unit (5).

9. Apparatus according to claim 8, **characterized in that** the measurement solar cell (2.1) is any solar cell of a commercially available PV module, modified, however, **in that** the same includes a socket (3) having two contacts (3.1, 3.4) connected only to the measurement solar cell (2.1) and two contacts (3.2, 3.5) to be connected only to the rendering unit (5).

10. Apparatus according to claim 6 or 7, **characterized in that** the measurement solar cell (2.1) is the first solar cell of a plurality of solar cells (2.1 to 2.n) of a commercially available PV module connected in series, modified **in that** the same includes a socket (3) having an additional contact (3.3) connected to the junction between the measurement solar cell (2.1) and the next subsequent solar cell (2.2) of the series connection.

11. Apparatus according to one of claims 6, 7 or 10, **characterized in that** the same includes a switching means (4) arranged between the PV generator (1) and the rendering unit (5), by means of which, during selected measurement intervals, all solar cells (2.2 to 2.n) of the PV generator (1), with the exception of the measurement solar cell (2.1), and in time periods between the measurement intervals, all solar cells (2.1 to 2.n) of the PV generator (1) including the measurement solar cell (2.1) are connectable to the rendering unit (5).

12. Apparatus according to claim 11, **characterized in that** the switching means (4) is connected to the microprocessor (9) and controlled by the same.

13. Apparatus according to one of claims 7 to 12, **characterized in that** the microprocessor (9) is programmed such that the measurement intervals follow each other at defined time intervals.

14. Apparatus according to one of claims 7 to 13, **characterized in that** the microprocessor (9) is programmed such that the measurement intervals have a preselected duration.

15. Apparatus according to one of claims 7 to 14, **characterized in that** the microprocessor (9) comprises an output (9.1) implemented as interface for transmitting the measurement values by means of lines.

16. Apparatus according to one of claims 7 to 14, **characterized in that** the microprocessor (9) comprises an output for radio transmission of the measurement values connected to a radio module (12) and an antenna (14).

17. System for determining measurement values characteristic for the solar irradiance at the location of a PV generator (1), comprising:
a measurement solar cell;
a rendering unit (5) for photovoltaic generation of electric energy; and
a PV generator (1) including a plurality of solar cells (2.1 to 2.n), wherein one solar cell (2.1) of the plurality of solar cells (2.1 to 2.n) of the PV generator (1) is the measurement solar cell, and the remaining solar cells (2.2 to 2.n) of the PV generator (1) are connected to the rendering unit (5); and
an electric measurement circuit (8) according to one of claims 6 to 16 connected to the measurement solar cell for measuring current and voltage values and connected to the rendering unit (5) for energy supply.

## Revendications

1. Procédé de détermination de valeurs de mesure qui sont caractéristiques de l'intensité de rayonnement solaire au site d'un générateur photovoltaïque (1) comprenant une pluralité de cellules solaires (2.1 à 2.n), dans lequel, pendant des intervalles de mesure sélectionnés, les valeurs de courant et de tension d'une cellule solaire de mesure qui est soumise au même rayonnement que le générateur photovoltaïque (1) sont mesurées et l'énergie électrique pour les dispositifs électriques requis à cet effet est générée de manière photovoltaïque,
**caractérisé par le fait**
**qu'**une cellule solaire (2.1) de la pluralité de cellules solaires (2.1 à 2.n) du générateur photovoltaïque (1) est utilisée comme cellule solaire de mesure,
**que** les cellules solaires restantes (2.2 à 2.n) du générateur photovoltaïque (1) génèrent, pendant les intervalles de mesure, l'énergie électrique, et
**que** pendant les intervalles de mesure est enregistrée une courbe caractéristique de courant/tension, correspondant au rayonnement actuel, de la cellule solaire de mesure (2.1), à partir de la courbe caractéristique de courant/tension enregistrée est déterminé le point de puissance maximale (point MPP) et est obtenue l'intensité de rayonnement associée au point MPP déterminé lors d'un étalonnage précédent.

2. Procédé selon la revendication 1, **caractérisé par le fait que** les valeurs de courant et de tension sont calculées à l'aide d'une charge réglable électroniquement (6).

3. Procédé selon la revendication 1 ou 2, **caractérisé par le fait que**, pendant les intervalles de mesure, la cellule solaire de mesure (2.1) est déconnectée du générateur photovoltaïque (1).

4. Procédé selon l'une des revendications 1 à 3, **caractérisé par le fait que** la cellule solaire de mesure (2.1) est étalonnée à l'aide d'un capteur étalon présentant une cellule solaire fabriquée selon la même technologie.

5. Procédé selon la revendication 4, **caractérisé par le fait que** l'étalonnage a lieu avec une source de lumière flash ou permanente ou à la lumière naturelle.

6. Dispositif de détermination de valeurs de mesure qui sont caractéristiques pour le rayonnement solaire au niveau du site d'un générateur photovoltaïque (1), comportant une pluralité de cellules solaires (2.1 à 2.n), aux caractéristiques suivantes:
un circuit de mesure électrique (8) pouvant être relié à une cellule solaire de mesure pour la mesure de valeurs de courant et de tension, et pouvant être relié, pour l'alimentation en énergie, à une unité de traitement (5) pour la génération photovoltaïque d'énergie électrique,
**caractérisé par le fait**
**que** le circuit de mesure électrique (8) est configuré pour enregistrer, pendant des intervalles de mesure sélectionnés, une courbe caractéristique de courant/tension correspondant au rayonnement actuel de la cellule solaire de mesure (2. 1), pour déterminer à partir de la courbe caractéristique de courant/tension enregistrée le point de puissance maximale (point MPP), et pour obtenir l'intensité de rayonnement associée au point MPP déterminé lors d'un étalonnage précédent, et
**qu'**une cellule solaire (2.1) de la pluralité de cellules solaires (2.1 à 2.n) du générateur photovoltaïque (1) est la cellule solaire de mesure et que les cellules solaires restantes (2.2 à 2.n) du générateur photovoltaïque (1) restent reliées à l'unité de traitement (5) pendant les intervalles de mesure.

7. Dispositif selon la revendication 6, **caractérisé par le fait que** le circuit de mesure (8) comporte une charge variable électroniquement (6) connectée en parallèle à l'une des cellules solaires de mesure (2.1), un microprocesseur (9) connecté à la charge (6) et une unité de commande (7) destinée à commander la charge (6).

8. Dispositif selon la revendication 6 ou 7, **caractérisé par le fait que** la cellule solaire de mesure (2.1) est reliée au circuit de mesure (8) et que toutes les cellules solaires (2.2 à 2.n) du générateur photovoltaïque (1), à l'exception de la cellule solaire de mesure (2.1), sont reliées à l'unité de traitement (5).

9. Dispositif selon la revendication 8, **caractérisé par le fait que** la cellule solaire de mesure (2.1) est une cellule solaire quelconque d'un module photovoltaïque disponible dans le commerce qui est toutefois modifié en ce sens qu'il comporte une prise de raccordement (3) avec deux contacts (3.1, 3.4) raccordés uniquement à la cellule solaire de mesure (2.1) et deux contacts (3.2, 3.5) à raccorder uniquement à l'unité de traitement (5).

10. Dispositif selon la revendication 6 ou 7, **caractérisé par le fait que** la cellule solaire de mesure (2.1) est la première cellule solaire d'une pluralité de cellules solaires (2.1 à 2.n) disposées en série d'un module photovoltaïque disponible dans le commerce qui est modifié en ce sens qu'il comporte une prise de raccordement (3) avec un contact additionnel (3.3) qui est raccordé au point de connexion entre la cellule solaire de mesure (2.1) et la cellule solaire (2.2) immédiatement suivante de la connexion en série.

11. Dispositif selon l'une des revendications 6, 7 ou 10, **caractérisé par le fait qu'**il comporte un moyen de commutation (4) disposé entre le générateur photovoltaïque (1) et l'unité de traitement (5), au moyen duquel, pendant des intervalles de mesure sélectionnés, toutes les cellules solaires (2.2 à 2.N) du générateur photovoltaïque (1), à l'exception de la cellule solaire de mesure (2.1), et, pendant des intervalles situés entre les intervalles de mesure, toutes les cellules solaires (2.1 à 2.n) du générateur photovoltaïque (1), y compris la cellule solaire de mesure (2.1), peuvent être raccordées à l'unité de traitement (5).

12. Dispositif selon la revendication 11, **caractérisé par le fait que** le moyen de commutation (4) est relié au microprocesseur (9) et commandé par ce dernier.

13. Dispositif selon l'une des revendications 7 à 12, **caractérisé par le fait que** le microprocesseur (9) est programmé de sorte que les intervalles de mesure se suivent à des intervalles de temps définis.

14. Dispositif selon l'une des revendications 7 à 13, **caractérisé par le fait que** le microprocesseur (9) est programmé de sorte que les intervalles de mesure aient une durée présélectionnée.

15. Dispositif selon l'une des revendications 7 à 14, **caractérisé par le fait que** le microprocesseur (9) présente une sortie (9.1) réalisée sous forme d'interface pour le transfert des valeurs de mesure au moyen de lignes.

16. Dispositif selon l'une des revendications 7 à 14, **caractérisé par le fait que** le microprocesseur (9) présente une sortie reliée à un module radio (12) et à une antenne (14) pour la transmission par radio des valeurs de mesure.

17. Système de détermination de valeurs de mesure qui sont caractéristiques de l'intensité de rayonnement solaire au site d'un générateur photovoltaïque (1), aux caractéristiques suivantes:
une cellule solaire de mesure;
une unité de traitement (5) pour la génération photovoltaïque d'énergie électrique; et
un générateur photovoltaïque (1) comprenant une pluralité de cellules solaires (2.1 à 2.n), où une cellule solaire (2.1) de la pluralité de cellules solaires (2.1 à 2.n) du générateur photovoltaïque (1) est la cellule solaire de mesure, et les cellules solaires restantes (2.2 à 2.n) du générateur photovoltaïque (1) sont reliées à l'unité de traitement (5); et
un circuit de mesure électrique (8) selon l'une des revendications 6 à 16, qui est relié à la cellule solaire de mesure pour mesurer les valeurs de courant et de tension, et qui est relié à l'unité de traitement (5) pour l'alimentation en énergie.
